(19) **Europäisches Patentamt**
**European Patent Office**
**Office européen des brevets**

(11) **EP 3 982 559 B1**

(12) **EUROPEAN PATENT SPECIFICATION**

(45) Date of publication and mention
of the grant of the patent:
**20.05.2026 Bulletin 2026/21**

(51) International Patent Classification (IPC):
*H04B 10/071* (2013.01)   *G01M 11/00* (2006.01)
*H04B 10/077* (2013.01)

(21) Application number: **20306188.2**

(52) Cooperative Patent Classification (CPC):
**G01M 11/33; H04B 10/071; H04B 10/0771**

(22) Date of filing: **09.10.2020**

(54) **METHOD AND APPARATUS FOR ESTIMATING THE LOCATION AND POWER LOSS OF ANOMALIES ALONG AN OPTICAL LINK**

VERFAHREN UND VORRICHTUNG ZUR BESTIMMUNG DER STELLEN UND VERLUSTLEISTUNG VON ANOMALIEN ENTLANG EINER OPTISCHEN VERBINDUNG

PROCÉDÉ ET APPAREIL D'ESTIMATION DE L'EMPLACEMENT ET DE LA PERTE DE PUISSANCE D'ANOMALIES LE LONG D'UNE LIAISON OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2022 Bulletin 2022/15**

(73) Proprietors:
• **Nokia Solutions and Networks Oy**
**02610 Espoo (FI)**
• **Telecom Paris Tech**
**91120 Palaiseau (FR)**

(72) Inventors:
• **MAY, Alix**
**91440 BURES SUR YVETTE (FR)**
• **RAMANTANIS, Petros**
**92160 ANTONY (FR)**
• **BOITIER, Fabien**
**75006 PARIS (FR)**
• **AWWAD, Elie**
**92160 ANTONY (FR)**
• **LONARDI, Matteo**
**91400 ORSAY (FR)**

(74) Representative: **Novagraaf Technologies**
**2 rue Sarah Bernhardt**
**CS90017**
**92665 Asnières-sur-Seine Cedex (FR)**

(56) References cited:
**US-A- 5 859 695**       **US-A1- 2007 071 450**
**US-A1- 2014 133 845**

• **TANIMURA TAKAHITO ET AL: "Fiber-Longitudinal Anomaly Position Identification Over Multi-Span Transmission Link Out of Receiver-end Signals", JOURNAL OF LIGHTWAVE TECHNOLOGY, IEEE, USA, vol. 38, no. 9, 2 April 2020 (2020-04-02), pages 2726 - 2733, XP011786327, ISSN: 0733-8724, [retrieved on 20200506], DOI: 10.1109/JLT.2020.2984270**

# EP 3 982 559 B1

## Description

<u>Technical Field</u>

Various example embodiments relate generally to methods and apparatus for estimating the location and power loss of anomalies along an optical link.

<u>Background</u>

Monitoring optical links, such as long distance optical communication links, is typically performed using an optical time-domain reflectometer (OTDR), which is an opto-electronic device based on the injection and extraction, from the same end of an optical fiber, of light pulses that are scattered or reflected back from inhomogeneities along the fiber.

OTDRs have a high cost, and typically work on an out-of-band channel not to disrupt the network amplifier. Further, OTDRs typically require a special hardware configuration, such as filters and couplers, to get a multi-span reach. To have complete information on optical losses in a link using OTDRs, an averaging of several hours of the reflected light might be needed for ultra-long haul links, thus not allowing for a "real-time" monitoring.

US 5,859,695 relates to a test method and system for testing fiber optic connectors in a fiber optic system by comparing an output signal from fiber optic system to a signal input thereto.

US 2007/071450 A1 relates to methods and systems for controlling optical power levels in an optical communications network.

<u>Summary</u>

A method and apparatus are disclosed herein for estimating the location and power loss of anomalies along an optical link from a signal power profile indicating a distance-wise optical power along the optical link and a reference signal power profile indicating a distance-wise reference optical power along the optical link.

In one embodiment, an apparatus comprises means configured to perform: obtaining a signal power profile indicating a distance-wise optical power along an optical link; obtaining a reference signal power profile indicating a distance-wise reference optical power along the optical link; determining a difference profile indicating a distance-wise power difference between the reference signal power profile and the signal power profile; and determining a derivative of the difference profile. The means are also configured to perform: determining, from the difference profile, an anomaly indicating a power loss in the optical link; determining, from the derivative, an estimated location of the anomaly; and determining, from the difference profile and the estimated location, an estimated power loss of the anomaly, characterized in that the estimated location of the anomaly is determined as a position corresponding to a maximum of the derivative in a region of the anomaly.

In one embodiment, a method comprises: obtaining a signal power profile indicating a distance-wise optical power along an optical link; obtaining a reference signal power profile indicating a distance-wise reference optical power along the optical link; determining a difference profile indicating a distance-wise power difference between the reference signal power profile and the signal power profile; and determining a derivative of the difference profile. The method also comprises: determining, from the difference profile, an anomaly indicating a power loss in the optical link; determining, from the derivative, an estimated location of the anomaly; and determining, from the difference profile and the estimated location, an estimated power loss of the anomaly, characterized in that the estimated location of the anomaly is determined as a position corresponding to a maximum of the derivative in a region of the anomaly.

In one embodiment, a computer-readable storage medium stores instructions which, when executed by a computer, cause the computer to perform a method. The method comprises: obtaining a signal power profile indicating a distance-wise optical power along an optical link; obtaining a reference signal power profile indicating a distance-wise reference optical power along the optical link; determining a difference profile indicating a distance-wise power difference between the reference signal power profile and the signal power profile; and determining a derivative of the difference profile. The method also comprises: determining, from the difference profile, an anomaly indicating a power loss in the optical link; determining, from the derivative, an estimated location of the anomaly; and determining, from the difference profile and the estimated location, an estimated power loss of the anomaly, characterized in that the estimated location of the anomaly is determined as a position corresponding to a maximum of the derivative in a region of the anomaly.

In some embodiments there is provided an apparatus comprising

at least one processor; and
at least one memory including computer program code;
the at least one memory and the computer program code configured to, with the at least one processor, cause the apparatus at least to perform a method comprising: obtaining a signal power profile indicating a distance-wise optical

2

power along an optical link; obtaining a reference signal power profile indicating a distance-wise reference optical power along the optical link; determining a difference profile indicating a distance-wise power difference between the reference signal power profile and the signal power profile; and determining a derivative of the difference profile. The method also comprises: determining, from the difference profile, an anomaly indicating a power loss in the optical link; determining, from the derivative, an estimated location of the anomaly; and determining, from the difference profile and the estimated location, an estimated power loss of the anomaly, characterized in that the estimated location of the anomaly is determined as a position corresponding to a maximum of the derivative in a region of the anomaly.

Brief Description of the Drawings

Example embodiments will now be described with reference to the accompanying drawings, in which:

FIG. 1 shows an example optical link and apparatus according to some embodiments described herein;
FIG. 2 shows a graph of anomaly losses according to some embodiments described herein;
FIG. 3 shows the graph of FIG. 2 in a log-log scale;
FIG. 4 shows a graph comparing real losses vs calculated losses according to some embodiments described herein; and
FIG. 5 shows an apparatus according to some embodiments described herein; and
FIG. 6 show a method according to some embodiments described herein.

Detailed Description

Example embodiments will now be described for estimating the location and power loss of anomalies along an optical link from a signal power profile indicating a distance-wise optical power along the optical link and a reference signal power profile indicating a distance-wise reference optical power along the optical link. Embodiments may be suitable for use with power profiles obtained from a receiver end of an optical link, and may provide improved location and power estimate accuracy.

Functional blocks denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

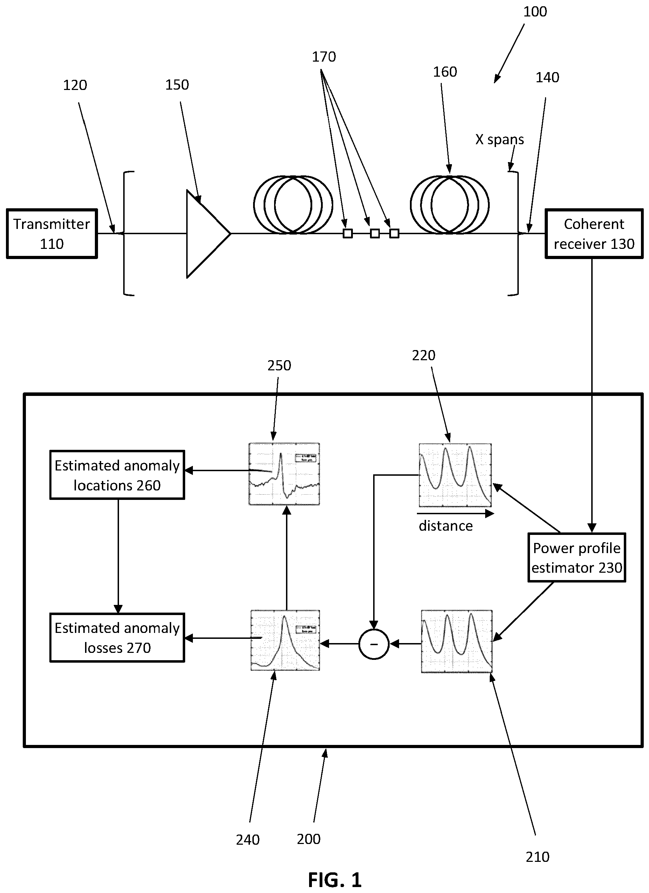

Referring now to FIG. 1, an example optical link 100 is shown. A transmitter 110 is positioned at a start 120 of the optical link 100 and a coherent receiver 130, allowing reception of the full optical field, is positioned at an end 140 of the optical link. The optical link 100 has an erbium doped fiber amplifier (EDFA) 150 and a single mode fiber (SMF) 160. The EDFA 150 and SMF 160 form a single span of the optical link 100. The optical link 100 may have multiple spans according to requirements, however for simplicity a single span is illustrated.

Power losses may occur at one or more anomalies 170 along the optical link 100. The anomalies 170 may have various causes, including but not limited to faults or malfunctions of passive optical components such as the SMF 160, connectors or splice defects and/or active optical components such as the EDFA 150. Anomalies may also indicate an attempt at intrusion or tapping into the optical link 100.

Also shown in FIG. 1 is an example apparatus 200 according to embodiments described herein. The apparatus 200 comprises means configured to perform obtaining a signal power profile 210 indicating a distance-wise optical power along the optical link 100. The means are further configured to perform obtaining a reference signal power profile 220 indicating a distance-wise reference optical power along the optical link. The term distance-wise is used herein to denote that the profiles indicate optical power at various distances along the optical link 100, in other words as a function of distance along the optical link 100.

In the illustrative example shown in FIG. 1, the profiles 210, 220 are obtained by a power profile estimator 230 that applies digital signal processing (DSP) to the output from the coherent receiver 130. The reference signal power profile 220 may be calculated at the installation of the optical link 100 or later on, for example after an OTDR characterization. In some embodiments the power profile estimator 230 has a recording mode in which it calculates a profile that is saved into memory as the reference signal power profile 220. In some embodiments the power profile estimator 230 has a monitoring mode in which it calculates the signal power profile 210, for instance periodically. In both recording mode and monitoring modes, a certain number of data samples are needed. This number increases for high baud rates, for example, but still allows for monitoring at a scale of a few seconds to a few minutes, thus enabling a "real-time" monitoring.

In some embodiments, the power profile estimator 230 obtains the profiles 210, 220 as follows. A fixed chromatic dispersion (CD) compensation, *TotalCD,* is applied to signals received from the coherent receiver 130. Polarisation de-multiplexing is then performed using an adaptive equalizer (AEQ). The fixed chromatic dispersion compensation is then added back after polarization de-multiplexing. The following process is independently performed for each horizontal and vertical polarisation waveform in the signal. First, partial CD compensation is applied to the electric field of each polarisation waveform in the signal, $u(t) = uI(t) + j\, uQ(t)$, with a CD value of $n\Delta c$, where $\Delta c$ is a parameter of the CD-resolution and $n$ is an integer number, i.e., $n = 0, 1, 2,..., N$, where N is the number of points in the resulting profile. The partial CD compensation corresponds to (linear) fiber back-propagation with distance $n\Delta c/D$, where $D$ is the dispersion of fiber per unit length. After partial CD compensation, nonlinear phase noise compensation due to the Kerr effect is applied based on an equation of $u(t)\exp(-j\,\varepsilon|u(t)|^2)$, where $\varepsilon$ is a parameter of nonlinear compensation. After nonlinear phase noise compensation, a residual CD compensation is applied, i.e., $TotalCD - n\Delta c$. The resulting electric field, which is a partially nonlinear-compensated waveform, is converted into a power output at the point of $n\Delta c$ in the profile by correlation with a reference waveform. The reference waveform is reconstructed from the received symbol information after demodulation, error correction, and symbol decision, and is modulated using the same data but without nonlinear noise compensation. The correlation between the partially nonlinear-compensated waveform and the reference waveform is an indicator of the point-wise nonlinear power at the point of $n\Delta c$, which consists of instant optical power and the nonlinear reflective index of the fiber at that point. To obtain a profile for the entire link, the above process is repeated for values of $n = 0, 1, 2,..., N$, where $N\Delta c/D$ represents the length of the optical link 100.

Various DSP approaches that may be used by the power profile estimator 230 are known in the art and any suitable approach may be used. One such approach is described by T. Tanimura, S. Yoshida, K. Tajima, S. Oda, and T. Hoshida, 'Fiber-Longitudinal Anomaly Position Identification Over Multi-Span Transmission Link Out of Receiver-end Signals', J. Lightwave Technol., vol. 38, no. 9, pp. 2726-2733, May 2020. Other techniques may be used, and the signal power profile 210 and the reference signal power profile 220 may be obtained by any suitable means known in the art.

The means of the apparatus 200 are further configured to perform determining a difference profile 240 indicating a distance-wise power difference along the optical link 100 between the reference signal power profile 220 and the signal power profile 210. The means are further configured to perform determining a derivative 250 of the difference profile.

The means of the apparatus 200 are further configured to perform determining, from the difference profile 240, an anomaly 170 indicating a power loss in the optical link 100. In some embodiments, whether an anomaly 170 is present at a given position on the profile may be determined according to whether the value of the difference profile 240 exceeds a threshold value, indicating loss in the optical link in excess of the loss in the reference signal power profile 220. In other embodiments, the means of the apparatus 200 may be configured to perform determining whether an anomaly 170 is present from the derivative 250 rather than the difference profile 240, for instance by whether the value of the derivative 250 exceeds a threshold value.

The means of the apparatus 200 are further configured to perform determining 260, from the derivative 250, an estimated location of the anomaly 170. In some embodiments, the estimated location of the anomaly 170 is determined as a position corresponding to a maximum of the derivative 250 in a region of the anomaly, which has been found to present a more accurate estimated location than using other methods, such as those based on a peak of the difference profile 240. The spatial resolution of the estimated location of the anomaly 170 depends on the number of points used to calculate the profiles 210, 220. Thus, accuracy of the estimated location may be increased still further by increasing the number of points. Since each point of the profiles 210, 220 can be calculated independently from others, the number of points used to calculate the profiles 210, 220 can be increased without significantly increasing the complexity of the DSP algorithm used by the power profile estimator 230.

The means of the apparatus 200 are further configured to perform determining 270 an estimated power loss of the anomaly 170 from the difference profile 240 and the estimated location of the anomaly 170.

In some embodiments, the estimated power loss is determined from a maximum amplitude of the difference profile 240 at the anomaly 170 and the estimated location. To understand the relation between the peak amplitude of the difference profile 240 at the anomaly 170 and the value of the power loss, an example will now be described with in which a 32GBd QPSK-modulated optical field propagates through an optical link consisting of three 100-km spans with losses ranging from 0 dB to 4.5 dB located at 1 meter, 7 km, 14 km, 21 km and 28 km respectively from the second amplifier (thus in the second span).

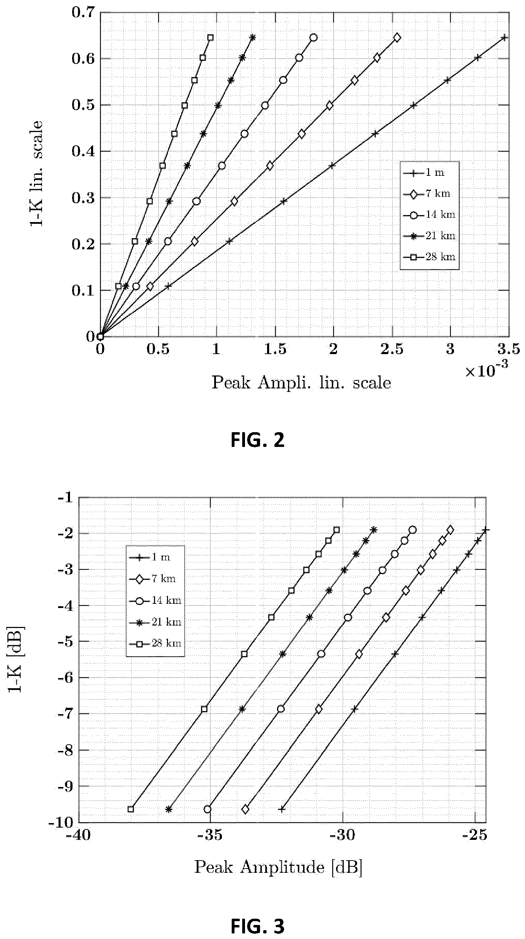

The power loss at an anomaly can be defined by a K factor, which represents the remaining optical power after the loss: $P^{after\,loss} = K * P^{before\,loss}$. Thus, the linear factor 1-K represents the percentage of lost power at the anomaly. The 1-K factor is plotted in FIGs. 2 and 3 as a function of peak amplitude in the difference profile 240 for each of the anomalies (04.5 dB losses). FIG. 2 has linear axis, while FIG. 3 shows the same data with log axis in dB.

Referring now to FIG. 2, the 1-K factor is linear as a function of peak amplitude, *Peak Ampli* , in the difference profile 240 for a given anomaly, and the slope, *C(loss position)*, depends on the position of the anomaly. One way to express this would be, in linear and in dB scale :

$$(1 - K) = C(loss\ position)\ \times Peak\ Ampli$$

$$(1 - K)_{dB} = C(loss\ position)_{dB} + Peak\ Ampli_{dB}$$

Referring now to FIG. 3, with logarithmic axes the slope C appears to be constant, at first order, with the plots translated according to distance corresponding approximately to the cumulated attenuation from the last amplifier before the anomaly (in this example, the second amplifier). Thus the 1-K factor can be expressed as:

$$(1 - K)_{dB} = C(loss\ position = 0)_{dB} + \alpha \left[\frac{dB}{km}\right] \times L[km] + Peak\ Ampli_{dB}$$

where $\alpha$ represents the attenuation of the fiber, and L is the estimated location of the anomaly 170 measured from the last amplifier. In some embodiments, each span of the optical link 100 is formed of a single type of fiber however different spans of the optical link 100 may be formed of different types of fibers that each have a corresponding value for $\alpha$. In such embodiments, values for $\alpha$ of each span in the optical link 100 may be a stored in a lookup table or database.

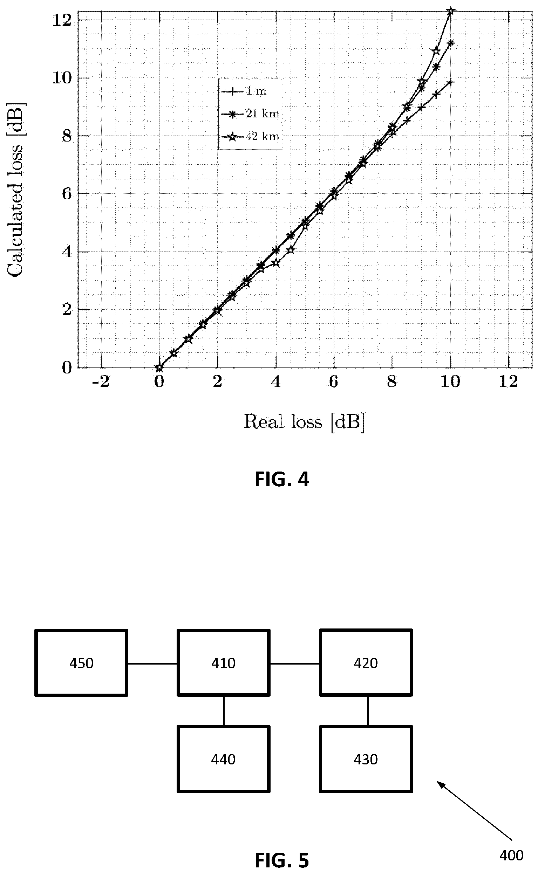

Referring now to FIG. 4, there is shown a comparison of real (actual) losses from anomalies in an optical link vs estimated losses obtained based on the above approach. As shown, it is possible to determine the real loss, with a certain precision, from the position of the anomaly determined from the peak of the derivative profile, the attenuation of the fiber $\alpha$ and the calibration factor, *C(loss position = 0)$_{dB}$*.

Performing calibration consists in finding the factor *C(loss position = 0)*, which is the slope of the 1-K linear factor as a function of the peak amplitude in the difference profile 240 of a loss located just after the amplifier 150 ("position zero"). This calibration can either be done by varying the output power of the amplifier 150 or by varying the power of a channel with respect to a "reference" power. Since the slope is constant, one point may be sufficient for calibration but to increase the precision of the calibration, several points, i.e. several output powers of the amplifier or several channel powers can be used. If the spans of the optical link 100 are different (different length, different modulation format, different Baud rate ... etc.) a calibration for each span is needed. For that same reason, in some examples not covered by the present invention a look-up table with the calibration factor *C(loss position = 0)* corresponding to different spans and/or types of transmission would allow for the monitoring of dynamic networks.

In some embodiments, the means of the apparatus 200 may be further configured to determine a plurality of anomalies 170 in the optical link 100. In such embodiments, the means of the apparatus 200 are configured to determine, from the difference profile 240, a plurality of anomalies 170, each anomaly 170 indicating a power loss in the optical link 100 at a different position. Each anomaly 170 may be determined using the same manner described above. The means of the apparatus 200 are further configured to determine, from the derivative 250, an estimated location of each anomaly 170, and determine, from the difference profile 240 and the estimated location, an estimated power loss of each anomaly 170.

In some embodiments, the means of the apparatus 200 may be further configured to determine the estimated power losses in the order of increasing distance of the estimated location of the anomalies 170 from a start 120 of the optical link 100. The estimated power loss of each anomaly may be further determined from the estimated losses of other anomalies with estimated locations closer to the start 120 of the optical link 100:

$$(1 - K)_{dB} = C(loss\ position = 0)_{dB} + \alpha \left[\frac{dB}{km}\right] \times L[km] + Peak\ Ampli_{dB}$$

$$+ \sum (1 - K_{prior})_{dB}$$

where $\Sigma(1 - K_{prior})_{dB}$ represents the sum of losses of anomalies closer to the start 120 of the optical link 100.

In other embodiments, the means of the apparatus 200 may be further configured to determine the estimated power losses in the order of decreasing magnitude of the anomalies 170 in the difference profile 240. Each estimated power loss is calculated in the same manner as described above. In some embodiments, the estimated power losses of anomalies 170 that are already determined may be adjusted when an estimated power loss of an anomaly 170 located closer to the start 120 of the optical link 100 is determined, for instance by reducing the magnitude of estimated power losses of those anomalies 170 located further away from the start 120 of the optical link 100. This embodiment may be beneficial in applications where the baud rate of communications on the optical link 100 is low. Further, by first estimating the power losses of anomalies 170 having the largest magnitude in the difference profile 240, a sufficient indication of losses in the optical link 100 may be obtained without requiring estimated power losses of every anomaly 170 is determined, thus saving energy and reducing processing requirements.

In some embodiments, the means of the apparatus 200 are further configured to generate an alert, for instance a network alert. Such an alert may be displayed or sent to an operator or input to a network routing system to dynamically alter the network configuration to account for the detected anomalies. In some embodiments, an alert is generated when at least one of the following conditions are met: the quantity of determined anomalies 170 exceeds a threshold, the estimated power loss of any anomaly 170 exceeds a threshold, the estimated losses of all determined anomalies 170 exceeds a threshold.

Referring now to FIG. 5, in some embodiments, the means, as referred to herein, may take the form of an apparatus 400 comprising at least one processor 410 (e.g., a central processing unit (CPU) and/or other suitable processor(s)) and at least one memory 420 (e.g., random access memory (RAM), read only memory (ROM), or the like). The apparatus 400 further comprises computer program code 430 and various input/output devices 440 (e.g., a user input device (such as a keyboard, a keypad, a mouse, a microphone, a touch-sensitive display or the like), a user output device 450 (such as a display, a speaker, or the like), and storage devices (e.g., a tape drive, a floppy drive, a hard disk drive, a compact disk drive, non-volatile memory or the like)). The computer program code 430 can be loaded into the memory 420 and executed by the processor 410 to implement functions as discussed herein and, thus, computer program code 430 (including associated data structures) can be stored on a computer readable storage medium, e.g., RAM memory, magnetic or optical drive or diskette, or the like. In some embodiments the processor 410 may comprise one or more central processing units (CPUs) and/or one or more graphical processing units (GPUs). In some embodiments the processor 410 may comprise a parallel processing unit. In some embodiments, the processor 410 may comprise an ASIC or FPGA. In some embodiments, the apparatus 400 may comprise a plurality of processors 410 networked together, such as a cloud computing system situated at end of optical link 100.

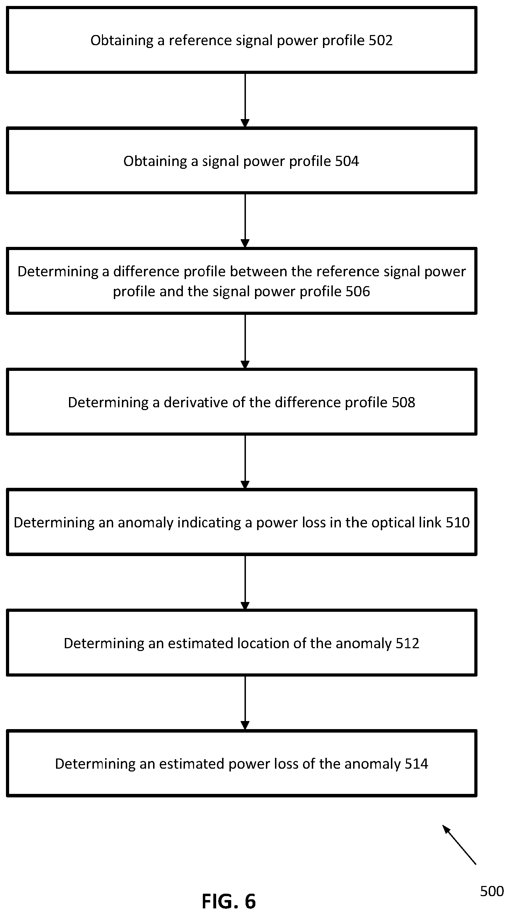

Some embodiments relate to a method 500 as shown in FIG. 6. The method 500 comprises, at 502, obtaining a reference signal power profile indicating a distance-wise optical power along an optical link, and at 504, obtaining a signal power profile indicating a distance-wise reference optical power along the optical link.

The method 500 further comprises, at 506, determining a difference profile indicating a distance-wise power difference between the reference signal power profile and the signal power profile, and determining, at 508, a derivative of the difference profile.

Next, the method 500 further comprises, at 510, determining an anomaly indicating a power loss in the optical link from the difference profile.

At 512, an estimated location of the anomaly is determined from the derivative. In some embodiments, the estimated location of the anomaly is determined as a position corresponding to a maximum of the derivative in a region of the anomaly.

At 514, an estimated power loss of the anomaly is determined from the difference profile and the estimated location in the manner described above. In some embodiments, the estimated power loss is determined from a maximum amplitude of the difference profile at the anomaly and the estimated location.

In some embodiments, the method 500 further comprises: determining a plurality of anomalies from the difference profile, each anomaly indicating a power loss in the optical link; determining an estimated location of each anomaly from the derivative; and determining an estimated power loss of each anomaly from the difference profile and the estimated location.

In some embodiments, the estimated power losses are determined in the order of increasing distance of the estimated location of the anomalies from a start of the optical link. In some embodiments, the estimated power loss of each anomaly is further determined from the estimated losses of other anomalies with estimated locations closer to the start of the optical link.

In other embodiments, the estimated power losses are determined in the order of decreasing magnitude of the anomalies in the difference profile. In some embodiments, the estimated power losses of anomalies that are already determined may be adjusted when an estimated power loss of an anomaly located closer to the start of the optical link is determined, for instance by reducing the magnitude of estimated power losses of those anomalies located further away from the start of the optical link.

In some embodiments, the method 500 further comprises generating an alert when at least one of the following conditions are met: the quantity of determined anomalies exceeds a threshold, the estimated loss of any anomaly exceeds a threshold, the estimated losses of all determined anomalies exceeds a threshold.

It will be appreciated that the functions depicted and described herein may be implemented in software (e.g., via implementation of software on one or more processors, for executing on a general purpose computer (e.g., via execution by one or more processors) so as to implement a special purpose computer, or the like) and/or may be implemented in hardware (e.g., using a general purpose computer, one or more application specific integrated circuits (ASIC), and/or any other hardware equivalents).

A further embodiment is a computer program product comprising a computer readable storage medium having computer readable program code embodied therein, the computer readable program code being configured to implement one of the above methods when being loaded on a computer, a processor, or a programmable hardware component. In some embodiments, the computer readable storage medium is non-transitory.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (200) comprising means configured to perform:

   obtaining a signal power profile (210) indicating a distance-wise optical power along an optical link (100) and a reference signal power profile (220) indicating a distance-wise reference optical power along the optical link (100) by a power profile estimator (230);
   determining a difference profile (240) indicating a distance-wise power difference between the reference signal power profile (220) and the signal power profile (210);
   determining a derivative (250) of the difference profile (240);
   determining, from the difference profile (240), an anomaly (170) indicating a power loss in the optical link (100);
   determining (260), from the derivative (250), an estimated location of the anomaly (170); and
   determining (270), from the difference profile (240) and the estimated location, an estimated power loss of the anomaly (170);

   **characterized in that** the estimated location of the anomaly (170) is determined as a position corresponding to a maximum of the derivative (250) in a region of the anomaly (170).

2. The apparatus of claim 1, wherein the estimated power loss is determined from a maximum amplitude of the difference profile (240) at the anomaly (170) and the estimated location.

3. The apparatus of any preceding claim, wherein the means are further configured to perform:

   determining, from the difference profile (240), a plurality of anomalies (170), each anomaly (170) indicating a power loss in the optical link (100);
   determining, from the derivative (250), an estimated location of each anomaly (170); and
   determining, from the difference profile (240) and the estimated location, an estimated power loss of each anomaly (170).

4. The apparatus of claim 3, wherein the estimated power losses are determined:

   in the order of increasing distance of the estimated location of the anomalies (170) from a start (120) of the optical link (100); or
   in the order of decreasing magnitude of the anomalies (170) according to the difference profile (240).

5. The apparatus of claim 4, wherein the estimated power loss of each anomaly (170) is further determined from the estimated losses of other anomalies with estimated locations closer to the start (120) of the optical link (100).

6. The apparatus of any preceding claim, wherein the means are further configured to perform generating an alert when at least one of the following conditions are met: the quantity of determined anomalies (170) exceeds a threshold, the estimated loss of any anomaly (170) exceeds a threshold, the estimated losses of all determined anomalies (170) exceeds a threshold.

7. The apparatus of any preceding claim, wherein the means comprises:

at least one processor (410); and
at least one memory (420) including computer program code (430), the at least one memory and computer program code configured to, with the at least one processor, cause the performance of the apparatus.

8. A computer-implemented method (500) comprising:

obtaining (502) a reference signal power profile indicating a distance-wise optical power along an optical link;
obtaining (504) a signal power profile indicating a distance-wise reference optical power along the optical link;
determining (506) a difference profile indicating a distance-wise power difference between the reference signal power profile and the signal power profile;
determining (508) a derivative of the difference profile;
determining (510), from the difference profile, an anomaly indicating a power loss in the optical link;
determining (512), from the derivative, an estimated location of the anomaly;
determining (514), from the difference profile and the estimated location, an estimated power loss of the anomaly;

**characterized in that** the estimated location of the anomaly is determined as a position corresponding to a maximum of the derivative in a region of the anomaly.

9. The method of claim 8, wherein the estimated power loss is determined from a maximum amplitude of the difference profile at the anomaly and the estimated location.

10. The method of claims 8 to 9, further comprising:

determining, from the difference profile, a plurality of anomalies, each anomaly indicating a power loss in the optical link;
determining, from the derivative, an estimated location of each anomaly; and
determining, from the difference profile and the estimated location, an estimated power loss of the anomaly.

11. The method of claims 8 to 10, wherein the estimated power losses are determined:

in the order of increasing distance of the estimated location of the anomalies from a start of the optical link; or
in the order of decreasing magnitude of the anomalies according to the difference profile.

12. The method of claim 11, wherein the estimated power loss of each anomaly is further determined from the estimated losses of other anomalies with estimated locations closer to the start of the optical link.

13. A computer readable storage medium having instructions stored therein which, when executed by a computer, cause the computer to perform a method (500), the method comprising:

obtaining (502) a signal power profile indicating a distance-wise optical power along an optical link;
obtaining (504) a reference signal power profile indicating a distance-wise reference optical power along the optical link;
determining (506) a difference profile indicating a distance-wise power difference between the reference signal power profile and the signal power profile;
determining (508) a derivative of the difference profile;
determining (510), from the difference profile, an anomaly indicating a power loss in the optical link;
determining (512), from the derivative, an estimated location of the anomaly;
determining (514), from the difference profile and the estimated location, an estimated power loss of the anomaly;
**characterized in that** the estimated location of the anomaly is determined as a position corresponding to a maximum of the derivative in a region of the anomaly.

**Patentansprüche**

1. Eine Vorrichtung (200), umfassend Mittel, die konfiguriert sind zum Durchführen von:

   Erhalten eines Signalleistungsprofils (210), das eine entfernungsabhängige optische Leistung entlang einer optischen Verbindung (100) angibt, und eines Referenzsignalleistungsprofils (220), das eine entfernungsabhängige optische Referenzleistung entlang der optischen Verbindung (100) angibt, durch einen Leistungsprofilschätzer (230);
   Bestimmen eines Differenzprofils (240), das eine entfernungsabhängige Leistungsdifferenz zwischen dem Referenzsignalleistungsprofil (220) und dem Signalleistungsprofil (210) angibt;
   Bestimmen einer Ableitung (250) des Differenzprofils (240);
   Bestimmen, aus dem Differenzprofil (240), einer Anomalie (170), die einen Leistungsverlust in der optischen Verbindung (100) angibt;
   Bestimmen (260), aus der Ableitung (250), eines geschätzten Ortes der Anomalie (170); und
   Bestimmen (270), aus dem Differenzprofil (240) und dem geschätzten Ort, eines geschätzten Leistungsverlustes der Anomalie (170);
   **dadurch gekennzeichnet, dass** der geschätzte Ort der Anomalie (170) als eine Position bestimmt wird, die einem Maximum der Ableitung (250) in einem Bereich der Anomalie (170) entspricht.

2. Die Vorrichtung nach Anspruch 1, wobei der geschätzte Leistungsverlust aus einer maximalen Amplitude des Differenzprofils (240) an der Anomalie (170) und dem geschätzten Ort bestimmt wird.

3. Die Vorrichtung nach einem der vorhergehenden Ansprüche, wobei die Mittel ferner konfiguriert sind zum Durchführen von:

   Bestimmen, aus dem Differenzprofil (240), einer Mehrzahl von Anomalien (170), wobei jede Anomalie (170) einen Leistungsverlust in der optischen Verbindung (100) angibt;
   Bestimmen, aus der Ableitung (250), eines geschätzten Ortes jeder Anomalie (170); und
   Bestimmen, aus dem Differenzprofil (240) und dem geschätzten Ort, eines geschätzten Leistungsverlustes jeder Anomalie (170).

4. Die Vorrichtung nach Anspruch 3, wobei die geschätzten Leistungsverluste bestimmt werden:

   in der Reihenfolge zunehmender Entfernung des geschätzten Ortes der Anomalien (170) von einem Anfang (120) der optischen Verbindung (100); oder
   in der Reihenfolge abnehmender Größe der Anomalien (170) gemäß dem Differenzprofil (240).

5. Die Vorrichtung nach Anspruch 4, wobei der geschätzte Leistungsverlust jeder Anomalie (170) ferner aus den geschätzten Verlusten anderer Anomalien mit geschätzten Orten bestimmt wird, die näher am Anfang (120) der optischen Verbindung (100) liegen.

6. Die Vorrichtung nach einem der vorhergehenden Ansprüche, wobei die Mittel ferner konfiguriert sind zum Durchführen des Erzeugens einer Warnung, wenn mindestens eine der folgenden Bedingungen erfüllt ist: die Anzahl der bestimmten Anomalien (170) einen Schwellenwert überschreitet, der geschätzte Verlust einer beliebigen Anomalie (170) einen Schwellenwert überschreitet, die geschätzten Verluste aller bestimmten Anomalien (170) einen Schwellenwert überschreiten.

7. Die Vorrichtung nach einem der vorhergehenden Ansprüche, wobei die Mittel umfassen:

   mindestens einen Prozessor (410); und
   mindestens einen Speicher (420), der Computerprogrammcode (430) enthält, wobei der mindestens eine Speicher und der Computerprogrammcode konfiguriert sind, um mit dem mindestens einen Prozessor die Ausführung der Vorrichtung zu bewirken.

8. Ein computerimplementiertes Verfahren (500), umfassend:

Erhalten (502) eines Referenzsignalleistungsprofils, das eine entfernungsabhängige optische Leistung entlang einer optischen Verbindung angibt;

Erhalten (504) eines Signalleistungsprofils, das eine entfernungsabhängige optische Referenzleistung entlang der optischen Verbindung angibt;

Bestimmen (506) eines Differenzprofils, das eine entfernungsabhängige Leistungsdifferenz zwischen dem Referenzsignalleistungsprofil und dem Signalleistungsprofil angibt;

Bestimmen (508) einer Ableitung des Differenzprofils;

Bestimmen (510), aus dem Differenzprofil, einer Anomalie, die einen Leistungsverlust in der optischen Verbindung angibt;

Bestimmen (512), aus der Ableitung, eines geschätzten Ortes der Anomalie;

Bestimmen (514), aus dem Differenzprofil und dem geschätzten Ort, eines geschätzten Leistungsverlustes der Anomalie;

**dadurch gekennzeichnet, dass** der geschätzte Ort der Anomalie als eine Position bestimmt wird, die einem Maximum der Ableitung in einem Bereich der Anomalie entspricht.

9. Das Verfahren nach Anspruch 8, wobei der geschätzte Leistungsverlust aus einer maximalen Amplitude des Differenzprofils an der Anomalie und dem geschätzten Ort bestimmt wird.

10. Das Verfahren nach den Ansprüchen 8 bis 9, ferner umfassend:

Bestimmen, aus dem Differenzprofil, einer Mehrzahl von Anomalien, wobei jede Anomalie einen Leistungsverlust in der optischen Verbindung angibt;

Bestimmen, aus der Ableitung, eines geschätzten Ortes jeder Anomalie; und

Bestimmen, aus dem Differenzprofil und dem geschätzten Ort, eines geschätzten Leistungsverlustes der Anomalie.

11. Das Verfahren nach den Ansprüchen 8 bis 10, wobei die geschätzten Leistungsverluste bestimmt werden:

in der Reihenfolge zunehmender Entfernung des geschätzten Ortes der Anomalien von einem Anfang der optischen Verbindung; oder

in der Reihenfolge abnehmender Größe der Anomalien gemäß dem Differenzprofil.

12. Das Verfahren nach Anspruch 11, wobei der geschätzte Leistungsverlust jeder Anomalie ferner aus den geschätzten Verlusten anderer Anomalien mit geschätzten Orten bestimmt wird, die näher am Anfang der optischen Verbindung liegen.

13. Ein computerlesbares Speichermedium, das darin gespeicherte Anweisungen enthält, die, wenn sie von einem Computer ausgeführt werden, den Computer veranlassen, ein Verfahren (500) auszuführen, wobei das Verfahren umfasst:

Erhalten (502) eines Signalleistungsprofils, das eine entfernungsabhängige optische Leistung entlang einer optischen Verbindung angibt;

Erhalten (504) eines Referenzsignalleistungsprofils, das eine entfernungsabhängige optische Referenzleistung entlang der optischen Verbindung angibt;

Bestimmen (506) eines Differenzprofils, das eine entfernungsabhängige Leistungsdifferenz zwischen dem Referenzsignalleistungsprofil und dem Signalleistungsprofil angibt;

Bestimmen (508) einer Ableitung des Differenzprofils;

Bestimmen (510), aus dem Differenzprofil, einer Anomalie, die einen Leistungsverlust in der optischen Verbindung angibt;

Bestimmen (512), aus der Ableitung, eines geschätzten Ortes der Anomalie;

Bestimmen (514), aus dem Differenzprofil und dem geschätzten Ort, eines geschätzten Leistungsverlustes der Anomalie;

**dadurch gekennzeichnet, dass** der geschätzte Ort der Anomalie als eine Position bestimmt wird, die einem Maximum der Ableitung in einem Bereich der Anomalie entspricht.

**Revendications**

1. Un appareil (200) comprenant des moyens configurés pour effectuer :

   obtention d'un profil de puissance de signal (210) indiquant une puissance optique en fonction de la distance le long d'une liaison optique (100) et d'un profil de puissance de signal de référence (220) indiquant une puissance optique de référence en fonction de la distance le long de la liaison optique (100) par un estimateur de profil de puissance (230) ;
   détermination d'un profil de différence (240) indiquant une différence de puissance en fonction de la distance entre le profil de puissance de signal de référence (220) et le profil de puissance de signal (210) ;
   détermination d'une dérivée (250) du profil de différence (240) ;
   détermination, à partir du profil de différence (240), d'une anomalie (170) indiquant une perte de puissance dans la liaison optique (100) ;
   détermination (260), à partir de la dérivée (250), d'un emplacement estimé de l'anomalie (170) ; et
   détermination (270), à partir du profil de différence (240) et de l'emplacement estimé, d'une perte de puissance estimée de l'anomalie (170) ;

   **caractérisé en ce que** l'emplacement estimé de l'anomalie (170) est déterminé comme étant une position correspondant à un maximum de la dérivée (250) dans une région de l'anomalie (170).

2. L'appareil selon la revendication 1, dans lequel la perte de puissance estimée est déterminée à partir d'une amplitude maximale du profil de différence (240) au niveau de l'anomalie (170) et de l'emplacement estimé.

3. L'appareil selon l'une quelconque des revendications précédentes, dans lequel les moyens sont en outre configurés pour effectuer :

   détermination, à partir du profil de différence (240), d'une pluralité d'anomalies (170), chaque anomalie (170) indiquant une perte de puissance dans la liaison optique (100) ;
   détermination, à partir de la dérivée (250), d'un emplacement estimé de chaque anomalie (170) ; et
   détermination, à partir du profil de différence (240) et de l'emplacement estimé, d'une perte de puissance estimée de chaque anomalie (170).

4. L'appareil selon la revendication 3, dans lequel les pertes de puissance estimées sont déterminées :

   dans l'ordre de distance croissante de l'emplacement estimé des anomalies (170) à partir d'un début (120) de la liaison optique (100) ; ou
   dans l'ordre de magnitude décroissante des anomalies (170) selon le profil de différence (240).

5. L'appareil selon la revendication 4, dans lequel la perte de puissance estimée de chaque anomalie (170) est en outre déterminée à partir des pertes estimées d'autres anomalies ayant des emplacements estimés plus proches du début (120) de la liaison optique (100).

6. L'appareil selon l'une quelconque des revendications précédentes, dans lequel les moyens sont en outre configurés pour effectuer la génération d'une alerte lorsqu'au moins l'une des conditions suivantes est remplie : la quantité d'anomalies déterminées (170) dépasse un seuil, la perte estimée de toute anomalie (170) dépasse un seuil, les pertes estimées de toutes les anomalies déterminées (170) dépassent un seuil.

7. L'appareil selon l'une quelconque des revendications précédentes, dans lequel les moyens comprennent :

   au moins un processeur (410) ; et
   au moins une mémoire (420) comprenant du code de programme informatique (430), la au moins une mémoire et le code de programme informatique étant configurés pour, avec le au moins un processeur, provoquer l'exécution de l'appareil.

8. Un procédé mis en œuvre par ordinateur (500) comprenant :

   obtention (502) d'un profil de puissance de signal de référence indiquant une puissance optique en fonction de la distance le long d'une liaison optique ;

obtention (504) d'un profil de puissance de signal indiquant une puissance optique de référence en fonction de la distance le long de la liaison optique ;

détermination (506) d'un profil de différence indiquant une différence de puissance en fonction de la distance entre le profil de puissance de signal de référence et le profil de puissance de signal ;

détermination (508) d'une dérivée du profil de différence ;

détermination (510), à partir du profil de différence, d'une anomalie indiquant une perte de puissance dans la liaison optique ;

détermination (512), à partir de la dérivée, d'un emplacement estimé de l'anomalie ;

détermination (514), à partir du profil de différence et de l'emplacement estimé, d'une perte de puissance estimée de l'anomalie ;

**caractérisé en ce que** l'emplacement estimé de l'anomalie est déterminé comme étant une position correspondant à un maximum de la dérivée dans une région de l'anomalie.

9. Le procédé selon la revendication 8, dans lequel la perte de puissance estimée est déterminée à partir d'une amplitude maximale du profil de différence au niveau de l'anomalie et de l'emplacement estimé.

10. Le procédé selon les revendications 8 à 9, comprenant en outre :

détermination, à partir du profil de différence, d'une pluralité d'anomalies, chaque anomalie indiquant une perte de puissance dans la liaison optique ;

détermination, à partir de la dérivée, d'un emplacement estimé de chaque anomalie ; et

détermination, à partir du profil de différence et de l'emplacement estimé, d'une perte de puissance estimée de l'anomalie.

11. Le procédé selon les revendications 8 à 10, dans lequel les pertes de puissance estimées sont déterminées :

dans l'ordre de distance croissante de l'emplacement estimé des anomalies à partir d'un début de la liaison optique ; ou

dans l'ordre de magnitude décroissante des anomalies selon le profil de différence.

12. Le procédé selon la revendication 11, dans lequel la perte de puissance estimée de chaque anomalie est en outre déterminée à partir des pertes estimées d'autres anomalies ayant des emplacements estimés plus proches du début de la liaison optique.

13. Un support de stockage lisible par ordinateur contenant des instructions qui, lorsqu'elles sont exécutées par un ordinateur, amènent l'ordinateur à exécuter un procédé (500), le procédé comprenant :

obtention (502) d'un profil de puissance de signal indiquant une puissance optique en fonction de la distance le long d'une liaison optique ;

obtention (504) d'un profil de puissance de signal de référence indiquant une puissance optique de référence en fonction de la distance le long de la liaison optique ;

détermination (506) d'un profil de différence indiquant une différence de puissance en fonction de la distance entre le profil de puissance de signal de référence et le profil de puissance de signal ;

détermination (508) d'une dérivée du profil de différence ;

détermination (510), à partir du profil de différence, d'une anomalie indiquant une perte de puissance dans la liaison optique ;

détermination (512), à partir de la dérivée, d'un emplacement estimé de l'anomalie ;

détermination (514), à partir du profil de différence et de l'emplacement estimé, d'une perte de puissance estimée de l'anomalie ;

**caractérisé en ce que** l'emplacement estimé de l'anomalie est déterminé comme étant une position correspondant à un maximum de la dérivée dans une région de l'anomalie.

**FIG. 1**

FIG. 2

FIG. 3

**FIG. 4**

**FIG. 5**

Obtaining a reference signal power profile 502

Obtaining a signal power profile 504

Determining a difference profile between the reference signal power profile and the signal power profile 506

Determining a derivative of the difference profile 508

Determining an anomaly indicating a power loss in the optical link 510

Determining an estimated location of the anomaly 512

Determining an estimated power loss of the anomaly 514

500

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5859695 A

- US 2007071450 A1

### Non-patent literature cited in the description

- **T. TANIMURA** ; **S. YOSHIDA** ; **K. TAJIMA** ; **S. ODA** ; **T. HOSHIDA**. Fiber-Longitudinal Anomaly Position Identification Over Multi-Span Transmission Link Out of Receiver-end Signals. *J. Lightwave Technol.*, May 2020, vol. 38 (9), 2726-2733